# EUROPÄISCHE PATENTSCHRIFT

(11) **EP 3 972 778 B1**
(45) Veröffentlichungstag und Bekanntmachung des Hinweises auf die Patenterteilung: **16.10.2024**
(21) Anmeldenummer: 20743608.0
(22) Anmeldetag: 14.07.2020
(51) Int. Cl.: B23Q 16/10

(54) **DREHTISCH**
ROTATING TABLE
PLATEAU TOURNANT

(30) Priorität: 17.08.2019 DE 102019005799
(43) Veröffentlichungstag der Anmeldung: 30.03.2022
(73) Patentinhaber: Kolibri Beteiligungsgesellschaft mbH & Co. KGaA, 14532 Kleinmachnow (DE)
(72) Erfinder: KEPPELER, Manuel, 72124 Pliezhausen (DE); LUDWIG, Markus, 72138 Kirchentellinsfurt (DE)
(74) Vertreter: Bartels und Partner, Patentanwälte
(86) Internationale Anmeldenummer: PCT/EP2020/069834
(87) Internationale Veröffentlichungsnummer: WO 2021/032364

(56) Entgegenhaltungen:
- EP-B2- 1 543 916
- US-A1- 2010 258 397

## Beschreibung

Die Erfindung betrifft einen Drehtisch mit den Merkmalen im Oberbegriff von Anspruch 1.

Durch EP 1 543 916 B2 ist ein als Drehtisch ausgebildeter Werkstücktisch bekannt mit einem Gehäuse als einem stationären Tischteil und einem drehbar an dem Gehäuse gelagerten Drehelement als demgegenüber drehbaren Tischteil sowie eine als Arretiereinrichtung ausgebildete Steuereinrichtung zum Fixieren der jeweiligen Drehwinkellage des Drehelements gegenüber dem Gehäuse.

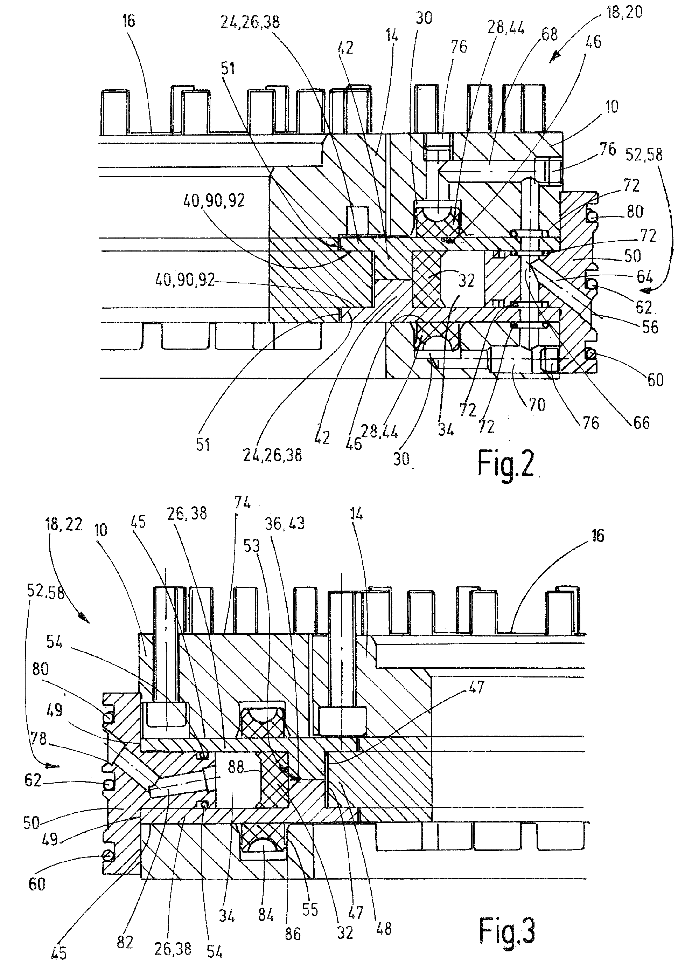

Bei einem Ausführungsbeispiel nach der Fig. 2 der aus dem Stand der Technik bekannten Lösung ist die Steuereinrichtung bei eingeschalteter Energieversorgung mittels eines ersten Betätigungsorgans gelöst und bei abgeschalteter Energieversorgung mittels eines Rückholorgans aktiviert. Das Betätigungsorgan ist ein dichtend in einer Ringnut geführter Ringkolben, unter dem ein mit Druckmittel beaufschlagbarer Druckraum angeordnet ist, wobei der Ringkolben eine feste, gegenüber dem Gehäuse unverdrehbare Scheibe betätigt, welche zum Fixieren des Drehelements mit einer drehbaren, aber gegenüber dem Drehelement unverdrehbaren Scheibe zusammenwirkt, und zwar derart, dass bei mit Druckmittel beaufschlagtem Druckraum der Ringkolben die feste Scheibe anhebt, so dass die drehbare Scheibe sich frei unter der festen Scheibe drehen kann und sich die feste Scheibe bei aus dem Druckraum abgelassenem Druckmittel durch das Rückholorgan absenkt und dadurch die drehbare Scheibe klemmt, wobei das Rückholorgan ein die Schwerkraft ausnutzendes Gewicht oder wenigstens eine Feder ist. Eine nicht zur bekannten Erfindungslösung gehörende Variante (Fig. 3) unterscheidet sich dahingehend von dem voranstehenden Ausführungsbeispiel, dass die Steuereinrichtung bei eingeschalteter Energieversorgung mittels des Ringkolbens als Betätigungsorgan aktiviert ist, der die am Gehäuse festgelegte Scheibe derart betätigt, dass bei mit Druckmittel beaufschlagtem Druckraum der Ringkolben die feste Scheibe in Richtung auf einen Gehäusering des stationären Tischteils drückt, so dass die drehbare Scheibe nunmehr von der festen Scheibe geklemmt wird.

Dahingehende Drehtische werden sowohl in der spanenden Bearbeitung in Werkzeugmaschinen als auch in der nicht spanenden Automatisierung eingesetzt. Drehtische werden dabei je nach Ausführung auch Rundtische, Rundschalttische, Teiltische oder Teilapparate genannt. Häufig werden Drehtische als sog. Rundschalttische mit fester Teilung eingesetzt. Ein solcher Rundschalttisch kann dabei beispielsweise in einer Rundtaktmaschine die Werkstücke von Bearbeitungsstation zu Bearbeitungsstation transportieren.

Was das Aufbringen großer Klemmkräfte anbelangt in Kombination mit dem definierten Lösen solcher großen Klemmkräfte nebst Freigabe des drehbaren Tischteils gegenüber dem stationären Tischteil, lässt die bekannte Lösung noch Wünsche offen.

Die US 2010/0258397 A1, die die Basis für den Oberbegriff des Anspruchs 1 bildet, offenbart einen Drehtisch mit einem stationären Tischteil und einem demgegenüber drehbaren Tischteil und mit einer Steuereinrichtung zum Herstellen und Lösen einer Klemmverbindung zwischen den Tischteilen, wobei im unbetätigten Zustand der Steuereinrichtung mindestens eine Klemmkraft auf zumindest einen der Tischteile wirkt, die sich mittels einer hydraulischen Zusatzklemmeinrichtung bei deren Druckbeaufschlagung erhöhen und mittels einer hydraulischen Löseeinrichtung bei deren Druckbetätigung absenken lässt bis zur vollständigen Freigabe der Drehbewegung des drehbaren Tischteils gegenüber dem stationären Tischteil.

Ausgehend von diesem Stand der Technik liegt daher der Erfindung die Aufgabe zugrunde, die bekannte Lösung dahingehend weiter zu verbessern, dass sich sehr hohe Klemmkräfte realisieren lassen, die sich definiert wieder lösen lassen.

Eine dahingehende Aufgabe löst ein Drehtisch mit den Merkmalen des Patentanspruchs 1 in seiner Gesamtheit.

Der erfindungsgemäße Drehtisch ist dadurch gekennzeichnet, dass das drehbare Tischteil zwischen zwei Klemmteilen aufgrund deren Federelastizität festgelegt, im unbetätigten Zustand der Steuereinrichtung eine Reibkraft erfährt, die die freie Drehbewegung hemmt.

Dadurch ist eine hinreichende Hemmung erreicht, mit der sichergestellt ist, dass das drehbare Tischteil sich nicht ungewollt aus einer einmal eingestellten respektive vorgegebenen Drehposition wegbewegt, was zu Kollisionen mit den Werkzeugen einer Bearbeitungsmaschine führen könnte, für die der Drehtisch eingesetzt ist.

Ferner ist vorgesehen, dass der Drehtisch einen stationären Tischteil und einen demgegenüber drehbaren Tischteil und eine Steuereinrichtung zum Herstellen und Lösen einer Klemmverbindung zwischen den Tischteilen aufweist, wobei im unbetätigten Zustand der Steuereinrichtung mindestens eine Klemmkraft auf zumindest einen der Tischteile wirkt, die sich mittels einer hydraulischen Zusatzklemmeinrichtung bei deren Druckbeaufschlagung erhöhen und mittels einer hydraulischen Löseeinrichtung bei deren Druckbetätigung absenken lässt bis zur vollständigen Freigabe der Drehbewegung des drehbaren Tischteils gegenüber dem stationären Tischteil.

Dadurch lassen sich mit der hydraulischen Zusatzklemmeinrichtung zusätzlich zu den bereits bestehenden Klemmkräften im unbetätigten Zustand der Steuereinrichtung sehr große Klemmkräfte auf das drehbare Tischteil ausüben, die mittels einer eigenständigen, hydraulischen Löseeinrichtung, bei deren Druckbetätigung wiederum aufgehoben werden können bis zur vollständigen Freigabe des drehbaren Tischteils und die keine Relativbewegung in axialer Richtung zulassen.

Sofern im Rahmen der Erfindungslösung von einer hydraulischen Löseeinrichtung die Rede ist, meint dies nicht, die hydraulische Zusatzklemmeinrichtung durch Wegnahme des zugehörigen Versorgungsdrucks zu lösen, sondern vielmehr, dass eine konstruktiv eigenständige Löseeinrichtung mit eigenständiger Druckversorgung und Druckbeaufschlagung vorhanden ist, die als zusätzliche Baukomponente neben der Zusatzklemmeinrichtung der Ansteuerung der Tischteile dient.

In einem weiteren bevorzugten Ausführungsbeispiel ist vorgesehen, dass die beiden Einrichtungen der Steuereinrichtung im stationär angeordneten Tischteil aufgenommen sind mit Druckräumen, die jeweils fluidführend an eine Druckversorgungseinrichtung angeschlossen sind. Dabei ist vorzugsweise vorgesehen, dass die Zusatzklemmeinrichtung zwei gegenüberliegende Kolben aufweist, die längsverfahrbar jeweils in einem zuordenbaren Druckraum aufgenommen sind, die beide gleichzeitig mit Druck beaufschlagt eine Bewegung der beiden Klemmteile aufeinander zu und die Klemmung mit erhöhter Klemmkraft auf das zumindest teilweise dazwischenliegende drehbare Tischteil veranlassen. Dabei ist von einer axialen relativbewegungsfreien Situation auszugehen. Vorzugsweise sind dabei die genannten Kolben aus umlaufenden Dichtringen gebildet, die neben einer Kraftbeaufschlagung auf die beiden zugeordneten Klemmringe gleichzeitig eine verlässliche Abdichtung in Richtung des drehbaren Tischteils herstellen.

In einem weiteren bevorzugten Ausführungsbeispiel ist vorgesehen, dass die Löseeinrichtung eine einen weiteren Druckraum gegenüber einem Trennspalt zwischen den beiden Klemmteilen abdichtende Dichteinrichtung aufweist, und dass bei Druckbeaufschlagung des weiteren Druckraums die beiden Klemmteile bei Freigabe des drehbaren Tischteils eine voneinander entgegengesetzt gerichtete Abhebekraft erfahren. Durch die spezielle Anordnung dieser weiteren Dichteinrichtung kommt es bei Druckbeaufschlagung des weiteren Druckraums auch zu einer Druckbeaufschlagung der Dichteinrichtung mit erhöhter Dichtkraftwirkung, so dass insoweit der Trennspalt mit dahinterliegendem, drehbarem Tischteil eine verbesserte Fluid-Abdichtung erfährt.

In einem weiteren bevorzugten Ausführungsbeispiel ist vorgesehen, dass die Steuereinrichtung derart angesteuert ist, dass bei betätigter Zusatzklemmeinrichtung die Löseeinrichtung drucklos und bei betätigter Löseeinrichtung die Zusatzklemmeinrichtung drucklos gehalten ist. Hierdurch ist eine präzise Ansteuerung von Zusatz-Klemm- und Löseeinrichtung realisiert, die energieeffizient ist.

In einem weiteren bevorzugten Ausführungsbeispiel ist vorgesehen, dass die beiden Klemmteile als Gleichteile ausgebildet plattenförmig sind, die an ihren einander zugewandten Stirnseiten einen ringförmigen Vorsprung aufweisen, die den weiteren Druckraum mit der Dichteinrichtung mit begrenzen sowie das drehbare Tischteil radial umfassen. Die Ausbildung der beiden Klemmteile als Gleichteile hilft die Herstellkosten für den Drehtisch zu reduzieren und die Montage zu vereinfachen.

Gemäß der Ausgestaltung des Drehtisches nach den weiteren Unteransprüchen ist eine zentrale Krafteinleitung erreicht, die quasi in einer vektoriellen Ebene parallel zur Drehachse des drehbaren Tischteils die Krafteinleitung für die Klemmung und die entgegengesetzte Krafteinleitung für das Lösen erlaubt, so dass die Ansteuervorgänge für die Tischteile zeitnah und störungsfrei erfolgen.

Im Folgenden wird der erfindungsgemäße Drehtisch anhand der Zeichnung näher erläutert. Dabei zeigen in prinzipieller und nicht maßstäblicher Darstellung die
- Fig. 1: einen Längsschnitt durch einen erfindungsgemäßen Drehtisch in einem ersten Ausführungsbeispiel;
- Fig. 2: einen gegenüber Fig. 1 vergrößerten Teillängsschnitt des in Fig. 1 mit I bezeichneten einen Umfangs-Randbereichs des Drehtisches;
- Fig. 3: einen gegenüber Fig. 1 vergrößerten Teillängsschnitt des in Fig. 1 mit II bezeichneten anderen Umfangs-Randbereichs des Drehtisches;
- Fig. 4: einen Längsschnitt des einen Umfangs-Randbereichs des erfindungsgemäßen Drehtisches in einem zweiten Ausführungsbeispiel; und
- Fig. 5: einen Längsschnitt des anderen Umfangs-Randbereichs des Drehtisches aus Fig. 4.

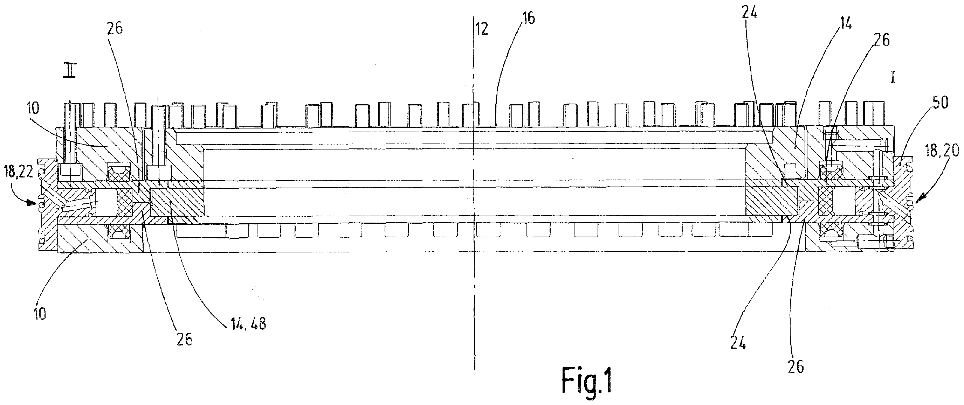

In Fig. 1 ist ein erfindungsgemäßer Drehtisch dargestellt in Form eines Werkstücktisches mit einem stationären Tischteil 10, der einen gegenüber dem stationären Tischteil 10 um eine Drehachse 12 drehbaren Tischteil 14 zumindest teilweise umfänglich umfasst, der eine Planscheibe 16 aufweist, an der Werkstücke in bekannter Weise zur Bearbeitung mittels Spann- und Festlegebolzen festlegbar sind (nicht dargestellt). Zudem ist als Teil des Drehtisches eine Steuereinrichtung 18 vorgesehen, die zum Festlegen des drehbaren Tischteiles 14 in und Freigeben des drehbaren Tischteiles 14 aus einer beliebigen Drehposition dient, nämlich zum Herstellen und Lösen einer Klemmverbindung zwischen dem stationären 10 und dem drehbaren Tischteil 14. Die Steuereinrichtung 18 weist eine hydraulische Zusatzklemmeinrichtung 20 und eine hydraulische Löseeinrichtung 22 auf, die separat voneinander ausgebildet sind.

Im unbetätigten Zustand der Steuereinrichtung 18 wirkt auf den drehbaren Tischteil 14 permanent eine Klemmkraft, die sich im betätigten Zustand der Steuereinrichtung 18 ändert, nämlich sich entweder bei einer zunehmenden Druckbeaufschlagung der hydraulischen Zusatzklemmeinrichtung 20 stufenlos erhöht oder sich bei einer zunehmenden Druckbetätigung der hydraulischen Löseeinrichtung 22 bis zur vollständigen Freigabe der Drehbewegung des drehbaren Tischteils 14 gegenüber dem stationären Tischteil 10 stufenlos verringert.

Die Steuereinrichtung 18, insbesondere die hydraulische Zusatzklemmeinrichtung 20 und die hydraulische Löseeinrichtung 22, ist in dem stationären Tischteil 10 angeordnet.

Zum Ausüben der Klemmkraft im unbetätigten Zustand der Steuereinrichtung 18 sind zumindest Teile 24 zweier Klemmteile 26 des Drehtisches, zwischen denen das drehbare Tischteil 14 zumindest teilweise angeordnet ist, zum Erzeugen einer Vorspannung jeweils derart federelastisch ausgebildet, dass zwischen den beiden Klemmteilen 26 und dem drehbaren Tischteil 14 eine Reibkraft auftritt, die im unbetätigten Zustand der Steuereinrichtung 18 permanent wirkt und die die freie Drehbewegung des drehbaren Tischteils 14 hemmt.

Zum Ausüben einer in Relation zu der Klemmkraft bei unbetätigter Steuereinrichtung 18 erhöhten Klemmkraft weist die Zusatzklemmeinrichtung 20 zwei gegenüberliegende Kolben 28 (Fig. 2) auf, die längsverfahrbar jeweils in einem zuordenbaren Druckraum 30 im stationären Tischteil 10 aufgenommen sind, die beide gleichzeitig mit Fluiddruck beaufschlagt eine Bewegung der beiden Klemmteile 26 aufeinander zu und die Klemmung mit erhöhter Klemmkraft auf das zumindest teilweise zwischen den Klemmteilen 26 angeordnete, drehbare Tischteil 14 veranlassen.

Zum Verringern der Klemmkraft bis zur vollständigen Freigabe der Drehbewegung des drehbaren Tischteiles 14 weist die Löseeinrichtung 22 eine Dichteinrichtung 32 (Fig. 2, 3) auf, die einen weiteren Druckraum 34 gegenüber einem zwischen den beiden Klemmteilen 26 ausgebildeten Trennspalt 36 abdichtet, bei dessen Druckbeaufschlagung die beiden Klemmteile 26 eine voneinander entgegengesetzt gerichtete Abhebekraft erfahren, wodurch das drehbare Tischteil 14 freigegeben wird.

Sämtliche Druckräume 30, 34 der Zusatzklemm- 20 und der Löseeinrichtung 22 sind jeweils fluidführend an eine in den Figuren nicht gezeigte Druckversorgungseinrichtung angeschlossen, wobei entweder die Zusatzklemmeinrichtung 20 oder die Löseeinrichtung 22 mit Druck beaufschlagt ist und gleichzeitig die andere der beiden Einrichtungen 20, 22 drucklos gehalten ist.

Die beiden Klemmteile 26 sind Gleichteile. Jedes der beiden Klemmteile 26 ist als plattenförmiger Ring 38 ausgebildet, an dem auf seiner dem anderen plattenförmigen Klemmteil 26 zugewandten Stirnseite 40 ein ringförmiger Vorsprung 42 (Fig. 2) mit rechteckigem, insbesondere quadratischem, Querschnitt ausgebildet ist. Die einander zugewandten, im Wesentlichen parallel zueinander ausgerichteten Stirnflächen 43 der Vorsprünge 42 bilden den Trennspalt 36 aus.

Die plattenförmigen Ringe 38 der beiden Klemmteile 26 sind im Wesentlichen parallel zueinander und koaxial zu der Drehachse 12 ausgerichtet. An ihrem der Umfangsseite 52 des stationären Tischteiles 10 zugewandten Ende 49 sind die Ringe 38 jeweils zwischen Teilen des stationären Tischteiles 10 bzw. in dem stationären Tischteil 10 festgelegt. Ausgehend von der dahingehenden endseitigen Festlegung erstreckt sich jeder Ring 38 quer zur Drehachse 12 in Richtung der Drehachse 12 mit einem, insbesondere geringfügigen, Spiel durch das stationäre Tischteil 10 in das drehbare Tischteil 14 hinein, wo das der Drehachse 12 zugewandte Ende 51 des Rings 38 mit einem, insbesondere geringfügigen, Spiel lose zwischen Teilen des drehbaren Tischteiles 14 angeordnet ist. Die der Stirnseite 40 mit dem Vorsprung 42 abgewandte Stirnseite 45 eines jeweiligen plattenförmigen Ringes 38 ist eben bzw. flach ausgebildet und verläuft parallel zu der den Vorsprung 42 aufweisenden Stirnseite 40 sowie zu der Stirnseite 43 des Vorsprungs 42. Die der Drehachse 12 zugewandten Seitenflächen 47 der beiden Vorsprünge 42, die zu den losen Enden 51 der Ringe 38 radial in Richtung der Umfangsseite 52 des Drehtisches versetzt an den einander zugewandten Stirnseiten 40 der Ringe 38 vorgesehen sind, verlaufen entlang einer Mantelfläche eines fiktiven Zylinders.

Derart angeordnet umfassen die beiden ringförmigen Vorsprünge 42 das drehbare Tischteil 14 beabstandet zumindest teilweise radial und begrenzen den weiteren Druckraum 34 mit, in dem die Dichteinrichtung 32 angeordnet ist, die den weiteren Druckraum 34 gegenüber dem Trennspalt 36 abdichtet.

Die beiden Kolben 28 der Zusatzklemmeinrichtung 20 sind aus Dichtringen 44 gebildet. Bei in die Druckräume 30 eingeleiteter Druckkraft bewegen sich die beiden ringförmigen Kolben 28 mit ihren einander zugewandten freien Stirnseiten 46 aufeinander zu und nehmen die Klemmteile 26 mit, die sich daher ebenfalls aufeinander zu bewegen, wodurch die Klemmteile 26 das mit seinem Umfangsrand 48 zwischen den Klemmteilen 26 angeordnete, drehbare Tischteil 14 in seiner aktuellen Drehposition festlegen, in dem ein Klemmspalt zwischen den beiden federelastisch ausgebildeten Klemmteilen 26 sich verringert.

Ein jeweiliger Kolben 28 dichtet den Druckraum 30, in dem dieser angeordnet ist, gegenüber dem benachbarten Klemmteil 26 ab und wirkt bei Druckbeaufschlagung im Wesentlichen senkrecht auf die flache bzw. ebene Stirnseite 45 des jeweiligen plattenförmigen Ringes 38, die der Stirnseite 43 dieses Ringes 38 mit dem Vorsprung 42 gegenüberliegt. Damit übt der eine Kolben 28 eine Kraft auf den einen Ring 38 aus, die der von dem anderen Kolben 28 ausgeübten Kraft auf den anderen Ring 38 im Wesentlichen entgegengerichtet ist, wodurch die von den Klemmteilen 26 ausgeübte Klemmkraft erzeugbar ist.

Sämtliche Druckräume 30, 34 sowie die in den Druckräumen 30, 34 angeordneten Dichtungen 32, 44 sind ringförmig ausgebildet, wobei der weitere Druckraum 34 der Löseeinrichtung 22 zwischen den beiden Druckräumen 30 der Zusatzklemmeinrichtung 20 angeordnet ist.

So sind die Druckräume 30, 34 derart zueinander angeordnet, dass diese durch die Mantelfläche eines sich koaxial zu der Drehachse 12 erstreckenden fiktiven Zylinders geschnitten werden können. Gleiches gilt für die in den Druckräumen 30, 34 angeordneten Dichtungen 32, 44. Im konkreten verlaufen die der Umfangsseite 52 des stationären Tischteiles 10 zugewandten Seitenflächen 53 der beiden Vorsprünge 42, an denen die Dichteinrichtung 32 zumindest bei Druckbeaufschlagung des weiteren Druckraumes 34 zur Anlage gelangt, entlang einer Mantelfläche eines fiktiven Zylinders, entlang der zumindest teilweise auch die dem drehbaren Tischteil 14 zugewandten Seitenwandungen 55 der Druckräume 30 verlaufen.

Wie die Figuren zeigen, ist zum Abschließen des durch die Klemmteile 26 zumindest teilweise mitbegrenzten weiteren Druckraumes 34 gegenüber dem äußeren des Drehtisches ein T- und zumindest teilringförmiger Einsatz 50 von der Umfangsseite 52 des stationären Tischteiles 10 aus zwischen die Stirnseiten 40 der plattenförmigen Ringe 38, die dem drehbaren Tischteil 14 und einander zugewandt sind, eingebracht. Der Einsatz 50 ist gegenüber den plattenförmigen Ringen 38 mittels jeweils eines koaxial zur Drehachse 12 verlaufenden Dichtringes 54 nach oben und unten hin abgedichtet.

Wie Fig. 1 und 2 zu entnehmen ist, ist zur Fluidversorgung des jeweiligen Druckraumes 30 der Zusatzklemmeinrichtung 20 ein Fluidanschluss 56 an der Umfangsseite 58 des Einsatzes 50 vorgesehen, der zwischen einem ersten 60 und einem zweiten 62 den Drehtisch, insbesondere den Einsatz 50, umfassenden Dichtring angeordnet ist. Von dem Fluidanschluss 56 ausgehend erstreckt sich ein erster Fluidkanal 64 durch den Einsatz 50, der sich an einem Verzweigungspunkt 66 in dem Einsatz 50 aufzweigt, in einen zweiten 68 und einen dritten 70 Fluidkanal, die sich jeweils durch den Einsatz 50, den jeweiligen plattenförmigen Ring 38 und das stationäre Tischteil 10 erstreckend in jeweils einen der Druckräume 30 einmünden. An den Übergangsstellen des jeweiligen Fluidkanals 64, 68, 70 von dem Einsatz 50 in den plattenförmigen Ring 38 und von dem plattenförmigen Ring 38 in das stationäre Tischteil 10 ist zwischen dem Einsatz 50 und dem Ring 38 sowie dem Ring 38 und dem Tischteil 10 ein Dichtring 72 zur Abdichtung des jeweiligen Fluidkanals 64, 68, 70 vorgesehen. Die Teile des zweiten 68 und des dritten 70 Fluidkanals, die in Form von Bohrungen von der Umfangsseite 52 oder der Oberseite 74 des stationären Tischteils 10 aus in dieses eingebracht sind, sind an ihren dahingehenden Ausmündungen mittels Stopfen 76 abdichtend verschlossen.

Wie in Fig. 1 und 3 dargestellt, ist zur Fluidversorgung des weiteren Druckraumes 34 der Löseeinrichtung 22 ein weiterer Fluidanschluss 78 an der Umfangsseite 58 des Einsatzes 50 vorgesehen, der zwischen dem zweiten 62 und einem dritten 80 den Einsatz 50 umfassenden Dichtring angeordnet ist und von dem ausgehend sich ein vierter Fluidkanal 82 durch den Einsatz 50 erstreckt, der in den weiteren Druckraum 34 einmündet.

Jeder Kolben 28 der Zusatzklemmeinrichtung 20 weist auf seiner den Klemmteilen 26 abgewandten Seite eine topfförmige Aussparung 84 und an seinem den Klemmteilen 26 abgewandten Endbereich eine Durchmessererweiterung 86 auf. Die Dichteinrichtung 32 der Löseeinrichtung 22 weist auf ihrer dem drehbaren Tischteil 14 abgewandten Seite eine trogförmige Aussparung 88 auf.

Im Folgenden wird die Funktion des erfindungsgemäßen Drehtisches näher erläutert:
Im unbetätigten Zustand der Steuereinrichtung 18 liegen beide Stirnflächen 40 der ringförmigen Klemmteile 26, die dem drehbaren Tischteil 14 sowie einander zugewandt sind, aufgrund ihrer Federelastizität an jeweils einer Stirnfläche 90 des Umfangsrandes 48 an, der das drehbare Tischteil 14 ringförmig umläuft und einen rechteckigen Querschnitt aufweist. Durch die Stirnflächen 40 der Klemmteile 26 wird eine Klemmkraft in Form einer Reibkraft auf den Umfangsrand 48 ausgeübt, so dass eine Drehbewegung des drehbaren Tischteiles 14 gehemmt wird. Zwischen den Vorsprüngen 42 der Klemmteile 26 ist der Trennspalt 36 ausgebildet.

Zur Verstärkung der Klemmkraft wird ausschließlich die Zusatzklemmeinrichtung 20 der Steuereinrichtung 18 betätigt, nämlich die Druckräume 30 der Zusatzklemmeinrichtung 20 über den ersten 64, den zweiten 68 und den dritten 70 Fluidkanal mit Fluiddruck beaufschlagt, wodurch die Kolben 28 eine Klemmkraft von außen auf die der Stirnseite 40 mit dem Vorsprung 42 abgewandte Stirnseite 45 der Klemmteile 26 ausüben, die wiederum die Klemmkraft der Klemmteile 26 auf den Umfangsrand 48 des drehbaren Tischteiles 14 erhöhen, insbesondere in Relation zu der Klemmkraft im unbetätigten Zustand der Steuereinrichtung 18. Dabei verringert sich die Spaltbreite des Trennspaltes 36.

Zur Verringerung der Klemmkraft wird ausschließlich die Löseeinrichtung 22 der Steuereinrichtung 18 betätigt, nämlich der weitere Druckraum 34 über den vierten Fluidkanal 82 mit Fluiddruck beaufschlagt, wodurch mittels des Fluiddrucks aus dem Inneren der Klemmteile 26 heraus eine Kraft auf die Klemmteile 26 ausgeübt wird, die die Klemmteile 26 entlang des Klemmspaltes 36 aufspreizt, wodurch die Klemmteile 26, mit ihren Stirnflächen 40 außer Kontakt mit dem drehbahren Tischteil 14 entlang dessen Umfangsrand 48 gelangen, so dass zwischen diesen jeweils ein Spalt 92 entsteht und die Klemmverbindung zwischen dem stationären 10 und dem drehbaren Tischteil 14 vollständig aufgehoben ist und das drehbare Tischteil 14 frei drehbar ist.

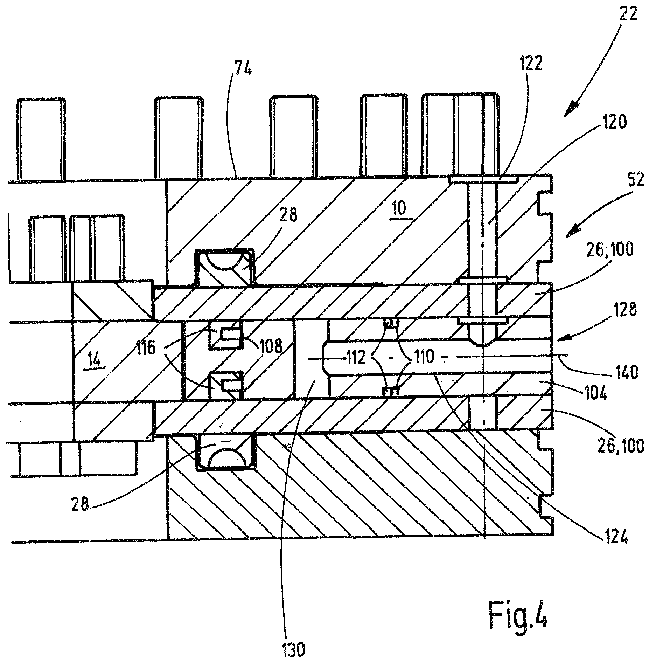

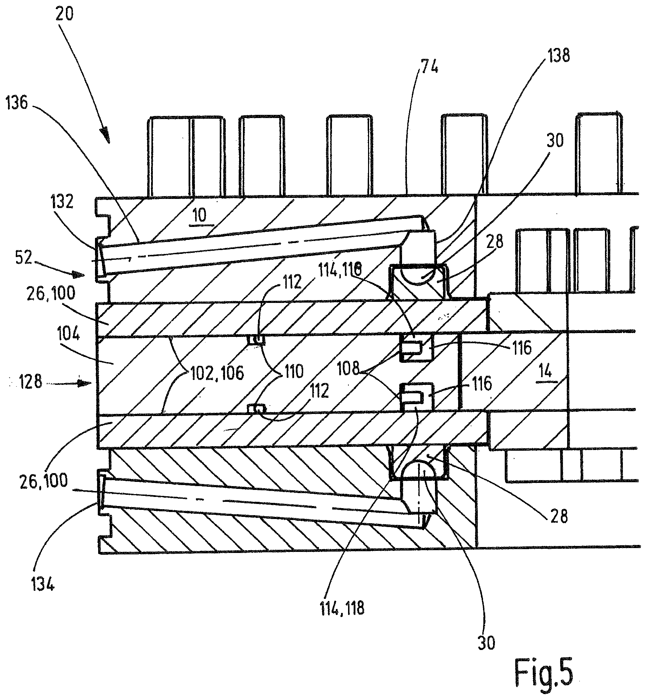

Fig. 4 und 5 zeigen den erfindungsgemäßen Drehtisch in einem zweiten Ausführungsbeispiel, das sich von dem ersten Ausführungsbeispiel wie folgt unterscheidet.

Die Klemmteile 26 sind jeweils als Gleichteile in Form eines plattenförmigen Ringes 100 ausgebildet, die parallel zueinander und koaxial zu der Drehachse 12 ausgerichtet sind. Die Stirnseiten 102 eines jeweiligen plattenförmigen Ringes 100 sind eben bzw. flach ausgebildet. Zwischen die Stirnseiten 102 der beiden plattenförmigen Ringe 100, die dem drehbaren Tischteil 14 und einander zugewandt sind, ist ein zumindest teilweise ringscheibenförmiger Einsatz 104 von der Umfangsseite 52 des stationären Tischteils 10 aus eingebracht. An jeder seiner Stirnseiten 106 weist der Einsatz 104 in seinem zwischen den Kolben 28 der Zusatzklemmeinrichtung 20 angeordneten Bereich jeweils eine ringförmige Nut 108 und in einem gegenüber diesem Bereich radial nach außen versetzten Bereich jeweils eine weitere ringförmige Nut 110 mit einer in Relation zu den einen Nuten 108 kleineren Querschnittsfläche auf. Jede der vier Nuten 108, 110 weist drei senkrecht zueinander ausgerichtete Seitenwände auf, die jeweils einen Dichtring 112, 114 aufnehmen. Jeder Dichtring 112, 114 dichtet den Einsatz 104 gegenüber dem jeweils benachbarten Klemmteil 26 ab. Die einen Dichtringe 112, die in den einen Nuten 108 angeordnet sind, sind jeweils ringförmig und im Querschnitt gesehen U-förmig ausgebildet. Die Basis 116 der U-Form ist der Drehachse 12 zugewandt und die Schenkel 118 der U-Form erstrecken sich von den freien Enden der Basis 116 in Richtung der Umfangsseite 52 des stationären Tischteiles 10 radial nach außen weg. Die in Relation zu den einen Dichtringen 112 radial nach außen versetzt angeordneten anderen Dichtringe 114 sind im Querschnitt im Sinne eines O-Rings kreisrund ausgebildet.

Wie Fig. 4 zeigt, ist bei dem zweiten Ausführungsbeispiel die Löseeinrichtung 22 durch einen Vertikalkanal 120 gebildet, der sich ausgehend von einem an der Oberseite 74 des stationären Tischteils 10 vorgesehenen Fluidanschluss 122 durch das stationäre Tischteil 10 und das obere Klemmteil 26 in den Einsatz 104 hinein erstreckt, wo der Vertikalkanal 120 in einen in den Einsatz 104 eingebrachten Längskanal 124 ausmündet. An den Übergangsstellen des Vertikalkanals 120 von dem stationären Tischteil 10 zu dem oberen Klemmteil 26 und von dem oberen Klemmteil 26 zu dem Einsatz 104 ist zur Abdichtung des Vertikalkanals 120 jeweils ein in den Figuren nicht dargestellter, weiterer Dichtring in Form eines O-Rings vorgesehen. Der Längskanal 124 erstreckt sich ausgehend von der Umfangsseite 128 des Einsatzes 104 aus radial nach innen in den Einsatz 104 hinein bis dieser, in Radialrichtung gesehen, zwischen den einen und den anderen Dichtringen 112, 114, in einen Querkanal 130 übergeht. An seinem der Umfangsseite 52 des stationären Tischteils 10 zugewandten Ende ist der Längskanal 124 durch einen in den Figuren nicht gezeigten Stopfen verschlossen. Der Querkanal 130 ist senkrecht zu dem Längskanal 124 ausgerichtet und mündet an seinen beiden freien Enden in Richtung jeweils eines Klemmteiles 26 aus dem Einsatz 104 aus.

Wie Fig. 5 zeigt, ist bei dem zweiten Ausführungsbeispiel zur Fluidversorgung des jeweiligen Druckraumes 30 der Zusatzklemmeinrichtung 20 an der Umfangsseite 52 des stationären Drehtisches 10 auf beiden Seiten des Einsatzes 104 jeweils ein Fluidanschluss 132, 134 vorgesehen. Der obere Fluidanschluss 132 zur Versorgung des Druckraumes 30 des oberen Kolbens 28 ist zwischen einem ersten und einem zweiten Dichtring angeordnet, die in den Figuren nicht dargestellt sind und jeweils das stationäre Tischteil 10 umlaufen. Der obere Fluidanschluss 132 und der obere Kolben 28 sind jeweils zwischen der Oberseite 74 des stationären Tischteils 10 und den Klemmteilen 26 angeordnet. Ausgehend von dem oberen Fluidanschluss 132 erstreckt sich ein Schrägkanal 136, der zur Oberseite 74 des stationären Tischteils 10 hin geneigt verläuft, in Richtung der Drehachse 12 in das stationäre Tischteil 10 hinein bis, in Radialrichtung gesehen, in den Bereich der Kolben 28, wo der Schrägkanal 136 in einen Verbindungskanal 138 übergeht, der in den Druckraum 30 des oberen Kolbens 28 ausmündet. An einer Ebene 140 gespiegelt, die die Drehachse 12 als Normalenvektor aufweist und mittig den Einsatz 104 schneidet, ist entsprechend die Fluidversorgung des Druckraums 30 des unteren Kolbens 28 ausgebildet, die einen unteren Fluidanschluss 134 aufweist, der an der Umfangsseite 52 des stationären Tischteils 10 zwischen einem jeweils das stationäre Tischteil 10 umfassenden dritten und vierten Dichtring angeordnet ist, die in den Figuren nicht dargestellt sind.

## Patentansprüche

1. Drehtisch mit einem stationären Tischteil (10) und einem demgegenüber drehbaren Tischteil (14) und mit einer Steuereinrichtung (18) zum Herstellen und Lösen einer Klemmverbindung zwischen den Tischteilen (10, 14), wobei im unbetätigten Zustand der Steuereinrichtung (18) mindestens eine Klemmkraft auf zumindest einen der Tischteile (10, 14) wirkt, die sich mittels einer hydraulischen Zusatzklemmeinrichtung (20) bei deren Druckbeaufschlagung erhöhen und mittels einer hydraulischen Löseeinrichtung (22) bei deren Druckbetätigung absenken lässt bis zur vollständigen Freigabe der Drehbewegung des drehbaren Tischteils (14) gegenüber dem stationären Tischteil (10), **dadurch gekennzeichnet, dass** das drehbare Tischteil (14) zwischen zwei Klemmteilen (26) aufgrund deren Federelastizität festgelegt, im unbetätigten Zustand der Steuereinrichtung (18) eine Reibkraft erfährt, die die freie Drehbewegung hemmt.

2. Drehtisch nach Anspruch 1, **dadurch gekennzeichnet, dass** die beiden Einrichtungen (20, 22) der Steuereinrichtung (18) im stationär angeordneten Tischteil (10) aufgenommen sind mit Druckräumen (30, 34), die jeweils fluidführend an eine Druckversorgungseinrichtung angeschlossen sind.

3. Drehtisch nach Anspruch 2, **dadurch gekennzeichnet, dass** die Zusatzklemmeinrichtung (20) zwei gegenüberliegende Kolben (28) aufweist, die längsverfahrbar jeweils in einem zuordenbaren Druckraum (30) aufgenommen sind, die beide gleichzeitig mit Druck beaufschlagt eine Bewegung der beiden Klemmteile (26) aufeinander zu und die Klemmung mit erhöhter Klemmkraft auf das zumindest teilweise dazwischenliegende drehbare Tischteil (14) veranlassen.

4. Drehtisch nach Anspruch 2 oder 3, **dadurch gekennzeichnet, dass** die Löseeinrichtung (22) eine einen weiteren Druckraum (34) gegenüber einem Trennspalt (36) zwischen den beiden Klemmteilen (26) abdichtende Dichteinrichtung (32) aufweist, und dass bei Druckbeaufschlagung des weiteren Druckraums (34) die beiden Klemmteile (26) bei Freigabe des drehbaren Tischteils (14) eine voneinander entgegengesetzt gerichtete Abhebekraft erfahren.

5. Drehtisch nach einem der vorstehenden Ansprüche, **dadurch gekennzeichnet, dass** die Steuereinrichtung (18) derart angesteuert ist, dass bei betätigter Zusatzklemmeinrichtung (20) die Löseeinrichtung (22) drucklos und bei betätigter Löseeinrichtung (22) die Zusatzklemmeinrichtung (20) drucklos gehalten ist.

6. Drehtisch nach Anspruch 4 oder 5, **dadurch gekennzeichnet, dass** die beiden Klemmteile (26) als Gleichteile ausgebildet plattenförmig sind, die an ihren einander zugewandten Stirnseiten (40) einen ringförmigen Vorsprung (42) aufweisen, die den weiteren Druckraum (34) mit der Dichteinrichtung (32) mit begrenzen sowie das drehbare Tischteil (14) radial umfassen.

7. Drehtisch nach einem der Ansprüche 3 bis 6, **dadurch gekennzeichnet, dass** die beiden Kolben (28) der Zusatzklemmeinrichtung (20) aus Dichtringen (44) gebildet sind, die mit ihren freien einander benachbart zugewandten Stirnseiten (46) bei eingeleiteter Druckkraft die Klemmteile (26) aufeinander zu bewegen und dabei das mit seinem Umfangsrand (48) dazwischenliegende drehbare Tischteil (14) in seiner jeweiligen Drehposition festlegen.

8. Drehtisch nach einem der Ansprüche 2 bis 7, **dadurch gekennzeichnet, dass** alle Dichtungen (32, 44) der Druckräume (30, 34) sowie die Druckräume (30, 34) selbst ringförmig ausgestaltet sind.

9. Drehtisch nach einem der Ansprüche 4 bis 8, **dadurch gekennzeichnet, dass** der weitere Druckraum (34) der Löseeinrichtung (22) zwischen den beiden Druckräumen (30) der Zusatzklemmeinrichtung (20) angeordnet ist.

## Claims

1. Rotary table with a stationary table part (10) and a table part (14) which is rotatable with respect thereto and with a control device (18) for producing and releasing a clamping connection between the table parts (10, 14), wherein in the unactuated state of the control device (18) at least one clamping force acts on at least one of the table parts (10, 14) which can be lifted by means of a hydraulic additional clamping device (20) when pressure is applied thereto and can be lowered by means of a hydraulic release device (22) when it is pressure-actuated until the rotational movement of the rotatable table part (14) with respect to the stationary table part (10) is completely released, **characterised in that** the rotatable table part (14), which is fixed between two clamping parts (26) due to their spring elasticity, undergoes a frictional force in the unactuated state of the control device (18), which frictional force inhibits the free rotational movement.

2. Rotary table according to claim 1, **characterised in that** the two devices (20, 22) of the control device (18) are accommodated in the stationarily arranged table part (10) with pressure chambers (30, 34) which are each connected to a pressure supply device in a fluid-conducting manner.

3. Rotary table according to claim 2, **characterised in that** the additional clamping device (20) has two opposing pistons (28) which are each accommodated so as to be longitudinally displaceable in an assignable pressure chamber (30) and which, when simultaneously pressurised, cause the two clamping parts (26) to move towards each other and clamp with increased clamping force on the rotatable table part (14) located at least partially therebetween.

4. Rotary table according to claim 2 or 3, **characterised in that** the release device (22) has a sealing device (32) which seals a further pressure chamber (34) with respect to a separating gap (36) between the two clamping parts (26), and **in that**, when the further pressure chamber (34) is pressurised, the two clamping parts (26) undergo a lifting force in opposite directions when the rotatable table part (14) is released.

5. Rotary table according to one of the preceding claims, **characterised in that** the control device (18) is actuated in such a manner that, when the additional clamping device (20) is activated, the release device (22) is kept unpressurised and, when the release device (22) is activated, the additional clamping device (20) is kept unpressurised.

6. Rotary table according to claim 4 or 5, **characterised in that** the two clamping parts (26), configured as identical parts, are plate-shaped and have an annular protrusion (42) on their end faces (40) directed towards each other, which also define the further pressure chamber (34) with the sealing device (32) as well as radially encompassing the rotatable table part (14).

7. Rotary table according to one of claims 3 to 6, **characterised in that** the two pistons (28) of the additional clamping device (20) are formed from sealing rings (44), which move the clamping parts (26) towards each other with their free end faces (46) adjacent to and directed towards each other when a compressive force is introduced and thereby fix the rotatable table part (14) located therebetween with its circumferential edge (48) in its respective rotational position.

8. Rotary table according to one of claims 2 to 7, **characterised in that** all seals (32, 44) of the pressure chambers (30, 34) and the pressure chambers (30, 34) themselves are annular in shape.

9. Rotary table according to one of claims 4 to 8, **characterised in that** the further pressure chamber (34) of the release device (22) is arranged between the two pressure chambers (30) of the additional clamping device (20).

## Revendications

1. Plateau tournant comportant une partie (10) de plateau fixe et une partie (14) de plateau pouvant tourner par rapport à la partie fixe et comportant un dispositif (18) de commande pour établir et libérer une liaison de serrage entre les parties (10, 14) de plateau, dans lequel, à l'état non actionné du dispositif (18) de commande, au moins une force de serrage agit sur au moins l'une des parties (10, 14) de plateau, force de serrage qui peut être augmentée au moyen d'un dispositif (20) de serrage hydraulique supplémentaire, lorsque de la pression lui est appliquée, et qui peut être abaissée au moyen d'un dispositif (22) de libération hydraulique, par le fait d'y appliquer une pression, jusqu'à libération complète du mouvement de rotation de la partie (14) de plateau pouvant tourner par rapport à la partie (10) de plateau fixe, **caractérisé en ce que** la partie (14) de plateau pouvant tourner est fixée entre deux parties (26) de serrage en raison de leur élasticité de ressort, la partie (14) pouvant tourner subissant, à l'état non actionné du dispositif (18) de commande, une force de frottement qui empêche le mouvement de rotation libre.

2. Plateau tournant suivant la revendication 1, **caractérisé en ce que** les deux dispositifs (20, 22) du dispositif (18) de commande sont reçus dans la partie (10) de plateau disposée fixe dans des chambres (30, 34) de pression, qui sont chacune connectées pour les fluides à un dispositif d'alimentation en pression.

3. Plateau tournant suivant la revendication 2, **caractérisé en ce que** le dispositif (20) de serrage supplémentaire comporte deux pistons (28) se faisant face, qui sont reçus dans une chambre (30) de pression qui peut leur être associée d'une manière mobile longitudinalement, les deux pistons étant soumis simultanément à une pression qui crée un déplacement des deux parties (26) de serrage l'une sur l'autre, et le serrage avec une force de serrage accrue sur la partie (14) de plateau pouvant tourner qui se trouve au moins partiellement entre eux.

4. Plateau tournant suivant la revendication 2 ou 3, **caractérisé en ce que** le dispositif (22) de libération comporte un dispositif (32) d'étanchéité, qui réalise l'étanchéité d'une chambre (34) de pression supplémentaire vis-à-vis d'un interstice (36) de séparation entre les deux parties (26) de serrage, et **en ce que**, lorsque la chambre (34) de pression supplémentaire est soumise à une pression, les deux parties (26) de serrage subissent une force de soulèvement dirigée dans des directions opposées, lorsque la partie (14) de plateau pouvant tourner est libérée.

5. Plateau tournant suivant l'une des revendications précédentes, **caractérisé en ce que** le dispositif (18) de commande est commandé de telle manière que, lorsque le dispositif (20) de serrage supplémentaire est actionné, le dispositif (22) de libération est maintenu sans pression et, lorsque le dispositif (22) de libération est actionné, le dispositif (20) de serrage supplémentaire est maintenu sans pression.

6. Plateau tournant suivant la revendication 4 ou 5, **caractérisé en ce que** les deux parties (26) de serrage sont réalisées en tant que parties identiques en forme de plaque, qui ont une saillie (42) de forme annulaire sur leurs faces (40) frontales se faisant face mutuellement, qui délimitent la chambre (34) de pression supplémentaire avec le dispositif (32) d'étanchéité et enferment radialement la partie (14) de plateau pouvant tourner.

7. Plateau tournant suivant l'une des revendications 3 à 6, **caractérisé en ce que** les deux pistons (28) du dispositif (20) de serrage supplémentaire sont formés d'anneaux (44) d'étanchéité, qui, par leurs faces (46) libres se faisant face mutuellement, déplacent les parties (26) de serrage l'une vers l'autre lorsqu'une force de pression est appliquée et, par ce processus, fixent la partie (14) de plateau pouvant tourner, qui se trouve entre eux par son bord (48) périphérique, dans sa position de rotation respective.

8. Plateau tournant suivant l'une des revendications 2 à 7, **caractérisé en ce que** toutes les étanchéités (32, 44) des chambres (30, 34) de pression ainsi que les chambres (30, 34) de pression elles-mêmes sont réalisées de forme annulaire.

9. Plateau tournant suivant l'une des revendications 4 à 8, **caractérisé en ce que** la chambre (34) de pression supplémentaire du dispositif (22) de libération est disposée entre les deux chambres (30) de pression du dispositif (20) de serrage supplémentaire.
